# EUROPÄISCHE PATENTSCHRIFT

(11) **EP 0 561 311 B1**
(45) Veröffentlichungstag und Bekanntmachung des Hinweises auf die Patenterteilung: **24.07.1996**
(21) Anmeldenummer: 93104115.6
(22) Anmeldetag: 13.03.1993
(51) Int. Cl.: F01N 3/20, F01N 3/28

(54) **Abgasreinigungsvorrichtung einer Brennkraftmaschine mit einem Konverter sowie einem Adsorber**
Exhaust cleaning device of an internal combustion engine with a converter and an adsorber
Dispositif d'épuration de gaz d'échappement d'un moteur à combustion interne avec un convertisseur et un adsorbeur

(30) Priorität: 18.03.1992 DE 4208624; 27.11.1992 DE 4240012
(43) Veröffentlichungstag der Anmeldung: 22.09.1993
(73) Patentinhaber: Bayerische Motoren Werke Aktiengesellschaft, 80788 München (DE)
(72) Erfinder: Zimmer, Rainer, Dr., W-8027 Neuried (DE); Zielinski, Rudolf, W-8051 Langenbach (DE); Mallog, Josef, Dr., W-8056 Neufahrn (DE)

(56) Entgegenhaltungen:
- EP-A- 0 485 179
- DE-A- 2 333 092
- DE-A- 3 928 760
- DE-A- 4 104 165

## Beschreibung

Die Erfindung betrifft eine Abgasreinigungsvorrichtung einer Brennkraftmaschine mit einem katalytischen Konverter sowie einem stromauf desselben angeordneten, insbesondere ein Zeolith enthaltenden Adsorber.

Eine derartige Abgasreinigungsvorrichtung ist in der DE 39 28 760 C2 gezeigt. Der Adsorber, der dort auf Zeolithbasis aufgebaut ist, dient dabei dazu, in der Startphase der Brennkraftmaschine, in der der katalytische Abgas-Konverter noch nicht seine Betriebstemperatur erreicht hat und daher noch nicht wirksam ist, Abgas-Schadstoffe zu speichern bzw. zu adsorbieren. Bei Verwendung von Zeolith ist die Adsorption von Kohlenwasserstoffen besonders wirkungsvoll. Mit zunehmender Erwärmung der Abgasanlage bzw. des Adsorbers werden die daran angelagerten Schadstoffe/Kohlenwasserstoffe wieder freigesetzt und können dann zumindest theoretisch im nachgeschalteten katalytischen Konverter, der dann ebenfalls seine Betriebstemperatur erreicht haben sollte, unschädlich gemacht werden. Tatsächlich hat sich jedoch gezeigt, daß ausgehend von einem Kaltstart der Brennkraftmaschine bei der Erwärmung der gesamten Brennkraftmaschinen-Abgasanlage das Adsorptionsvermögen eines Adsorbers eher nachläßt als ein katalytischer Konverter in der Lage ist, Kohlenwasserstoffe erfolgreich zu konvertieren. Das heißt, daß die zunächst im Adsorber gespeicherten Kohlenwasserstoffe/Schadstoffe auch wieder freigesetzt werden, noch ehe der katalytische Konverter diese Schadstoffe unschädlich machen kann. Die kurzzeitige Speicherung der Kohlenwasserstoffe ausgehend von einem Kaltstart der Brennkraftmaschine bleibt somit im wesentlichen unwirksam, da in Summe betrachtet keine Entlastung der Umwelt erfolgt, sondern die Schadstoffe lediglich zu einem späteren Zeitpunkt konzentriert ausgestoßen werden.

Zwar könnte diese Problematik durch eine grundsätzlich bekannte Beheizung des Katalysators gemildert werden, jedoch führt das einfache Vorsehen einer elektrischen Aufheizvorrichtung analog der EP-A-0 485 179 nicht zu befriedigenden Ergebnissen. Weitere Verbesserungen aufzuzeigen, ist demnach Aufgabe der vorliegenden Erfindung.
Zur Lösung dieser Aufgabe sind die kennzeichnenden Merkmale des ersten Patentanspruches vorgesehen. Vorteilhafte Aus- und Weiterbildungen beschreiben die Unteransprüche.

Erfindungsgemäß ist eine als Brenner mit eigener Brennstoffversorgung ausgebildete Heizvorrichtung vorgesehen, die nach einem Kaltstart der Brennkraftmaschine die ebenfalls kalte Abgasanlage bzw. den ebenfalls kalten katalytischen Konverter schneller auf seine Betriebstemperatur bringen kann. Somit ist gewährleistet, daß dann, wenn der Adsorber, beispielsweise Zeolith-Adsorber, die zunächst gespeicherten Schadstoffe/Kohlenwasserstoffe wieder freigibt, der katalytische Konverter diese Schadstoffe erfolgreich konvertieren kann. Dabei ist die Anordnung so zu wählen, daß eine Erwärmung des Adsorbers durch die Heizvorrichtung zumindest im wesentlichen ausgeschlossen ist, d. h. die Heizvorrichtung sollte ausreichend weit vom Adsorber beabstandet sein. Zwar sind derartige Brenner, die einen katalytischen Konverter schneller auf seine Betriebstemperatur bringen, an sich bekannt, jedoch sind beim bekannten Stand der Technik diese Konverter stets direkt stromab der Brennkraftmaschine angeordnet. Würde man nun bei einer gattungsgemäßen Abgasreinigungsvorrichtung mit einem katalytischen Konverter sowie einem diesem vorgeschalteten Adsorber einen Brenner ebenfalls direkt stromab der Brennkraftmaschine und somit stromauf des Adsorbers anordnen, so würde der Wirkungsgrad einer derartigen Abgasreinigungsvorrichtung noch verschlechtert, da der Adsorber lediglich für einen noch kürzeren Zeitraum als ohne Brenner in der Lage wäre, Schadstoffe einzufangen und zu speichern. Demgegenüber wurde bei der vorliegenden Erfindung erkannt, daß mit der vorgeschlagenen Brenneranordnung bzw. Heizvorrichtungs-Anordnung einerseits der Adsorber seine bekannte Wirksamkeit behält, und daß andererseits mit Abschluß der Adsorptionsfunktion der nachgeschaltete katalytische Konverter bereits wirksam ist, d. h. in der Lage ist, die emittierten Abgas-Schadstoffe erfolgreich umzuwandeln.

Erfindungsgemäß ist der Brenner außerhalb der den Adsorber mit dem Konverter verbindenden Abgasanlage angeordnet, um bei Dauerbetrieb der Brennkraftmaschine kein Strömungshindernis darzustellen. Die Erwärmung bzw. Aufheizung des Konverters erfolgt dabei über die Brenner-Abgase. Diese werden hierzu stromauf des Konverters in die Abgasanlage eingeleitet. Dabei werden die Einströmverhältnisse der Brennerabgase in das Abgasrohr verbessert sowie die Vermischung zwischen den Brennerabgasen und den Brennkraftmaschinenabgasen im Sinne einer gesteigerten thermischen Reaktion optimiert, wenn das Brennerrohr annähernd tangential in das Abgasrohr mündet. Dabei kann das Brennerrohr und/oder das Abgasrohr in oder stromauf dieses Mündungsbereiches zumindest teilweise gebogen ausgebildet sein, um einen gewünschten Drall zu erzielen, der einer verbesserten Verwirbelung zwischen den Brennerabgasen und den Brennkraftmaschinenabgasen förderlich ist.

Weiterhin wurde erkannt, daß auch ein üblicher katalytischer Konverter als Adsorber wirken kann, d. h. auch in einem üblichen katalytischen Konverter können anschließend an einen Kaltstart der Brennkraftmaschine wirkungsvoll kurzzeitig Schadstoffe gespeichert werden, die erst mit zunehmender Erwärmung des Adsorbers wieder freigesetzt werden. Zwischenzeitlich wurde jedoch der eigentliche, dem Adsorber nachgeschaltete katalytische Konverter durch die vom Adsorber ausreichend weit beabstandete Heizvorrichtung auf seine Betriebstemperatur gebracht, so daß nunmehr die vom Adsorber freigesetzten Schadstoffe im katalytischen Konverter erfolgreich wie bekannt umgewandelt werden können. Verwendet man also, wie fakultativ angegeben, einen katalytischen Konverter als Adsorber, so ergibt sich eine Reihenanordnung zweier katalytischer Konverter mit beispielsweise zwischengeschalteter Heizvorrichtung für den zweiten Konverter.

Besitzt der Brenner neben der eigenen Brennstoffversorgung auch eine eigene Brennluftversorgung, so läßt sich ein optimaler Brennerbetrieb auf einfache Weise einstellen. Eine eigene Brennstoffversorgung für den Brenner ist im übrigen erforderlich, da im Bereich des Brenners ein brennbares Gemisch, u. a. bestehend aus Kohlenwasserstoffen, vorhanden sein muß. Wenn aber der Brenner einem Adsorber, der u. a. Kohlenwasserstoffe aus dem Abgasstrom ausscheidet, nachgeschaltet ist, so müssen selbstverständlich die für den erfolgreichen Brennerbetrieb erforderlichen Kohlenwasserstoffe wieder separat zugeführt werden.

Ist der Adsorber selbst als Katalysatorkörper ausgebildet, so wird, indem das Brennerrohr stromab des ersten, der Brennkraftmaschine zugewandten Katalysatorkörpers in das Abgasrohr mündet, der erste Katalysatorkörper, der oftmals thermisch gealtert ist, umgangen. Nach längerer Betriebsdauer der Brennkraftmaschinen-Abgasanlage verliert nämlich der erste, der Brennkraftmaschine zugewandte Katalysatorkörper teilweise durch Verschmutzung aber auch durch thermische Einflüsse an Wirksamkeit. Daraus entstehende Nachteile bezüglich der Aufheizung des Katalysatorkörpers werden umgangen, wenn - wie vorgeschlagen - das Brennerrohr erst stromab dieses gealterten Körpers, der gleichzeitig als Adsorber wirkt, in die Abgasanlage mündet.

Vorteilhaft kann es sein, wenn stromauf des Brenners eine weitere Lufteinblasung in das Brennkraftmaschinen-Abgasrohr vorgesehen ist. Hiermit ist es möglich, für den stromab des Brenners liegenden thermischen Reaktor einen ausreichenden Sauerstoffüberschuß zur Verfügung zu stellen, ohne hierbei Einschränkungen im Hinblick auf den Brennerbetrieb in Kauf nehmen zu müssen.

Das Abgasrohr wirkt nämlich bei Betrieb des Brenners im Bereich zwischen der Einleitung der heißen Brennerabgase sowie dem nachgeschalteten katalytischen Konverter als an sich bekannter thermischer Reaktor. Dies bedeutet, daß in diesem Bereich des Abgasrohres unter Einfluß der heißen Brennerabgase im Abgasstrom der Brennkraftmaschine gewünschte Nachreaktionen stattfinden können, die nichts anderes darstellen als eine weitere Nachverbrennung noch brennbarer Bestandteile des Brennkraftmaschinenabgases. Dieser thermische Reaktor wird dabei zumeist als sog. Mager-Reaktor betrieben. Dies ergibt sich dabei durch die Zusammensetzung des Gemisches im Brenner und der Brennkraftmaschine, d. h. durch das Luft-Brennstoff-Verhältnis des der Brennkraftmaschine bzw. dem Brenner zugeführten Gemisches. Bevorzugt wird der Brenner generell mit einem annähernd konstanten Luft-Brennstoff-Verhältnis im Bereich von 1,4 bis 1,7 betrieben, während die Brennkraftmaschine anschließend an einen Kaltstart zumeist mit unterstöchiometrischem Gemisch versorgt wird.

Mit der beschriebenen weiteren Lufteinblasung ist es somit möglich, den Brenner mit einem optimalen Luft-Brennstoff-Verhältnis zu betreiben und unabhängig davon zusätzlich Sauerstoff für die thermische Nachverbrennung des Brennkraftmaschinenabgases zur Verfügung zu stellen und zusätzlich aufgrund der größeren Luftmasse eine schnellere Durchwärmung des Katalysators/Konverters zu ermöglichen, wobei aufgrund der Lufteinblasung stromauf des Brenners eine optimale Durchmischung des Brennkraftmaschinenabgases mit dem zusätzlichen Sauerstoff bereits vor Einleitung der Brennerabgase erreicht werden kann. Dabei kann sowohl die Zusatzlufteinblasung als auch die Versorgung des Brenners mit Brennluft über jeweils ein separates Gebläse erfolgen, es ist aber auch möglich, diese beiden Luftströme mittels eines einzigen Gebläses zu fördern. Dieses Gebläse bzw. die ggf. mehrfach vorhandenen Gebläse können dabei in ihrer Förderleistung den jeweiligen Anforderungen entsprechend stufenlos oder stufenweise regelbar sein. Ebenso ist es möglich, den dem Brenner zugeführten Brennstoffmassenstrom den jeweiligen Erfordernisen entsprechend regelbar zuzuführen. Weiterhin kann im Sinne einer optimalen Vermischung zwischen der zusätzlich eingeblasenen Luftmenge sowie dem Brennkraftmaschinen-Abgasstrom auch diese weitere Lufteinblasung über eine annähernd tangential in das Abgasrohr mündende Einblaseleitung erfolgen.

Stromab der Mündungsstelle dieser Brenner-Abgase bzw. direkt stromauf des Konverters kann dabei eine im Zusammenhang mit katalytischen Abgasreinigungsvorrichtungen bekannte Lambda-Sonde angeordnet sein. Dieser vorgeschlagene Montageort ermöglicht es, trotz der Zufuhr von insbesondere überstöchiometrischem Brenner-Abgas den katalytischen Konverter, insbesondere 3-Wege-Katalysator, mit "stöchiometrischem Abgas" zu beaufschlagen und somit eine optimale Reduktion von Stickoxiden zu erzielen. Der Begriff des "stöchiometrischen Abgases" ist dabei so zu deuten, daß die Brennkraftmaschine unter Ausnutzung der Signale der Lambda-Sonde mit einem derartigen Gemisch betrieben wird, daß das Brennkraftmaschinen-Abgas und das Brenner-Abgas ein derartiges Abgasgemisch ergeben, als wenn die Brennkraftmaschine bei stillgesetztem Brenner mit stöchiometrischem Gemisch betrieben werden würde.

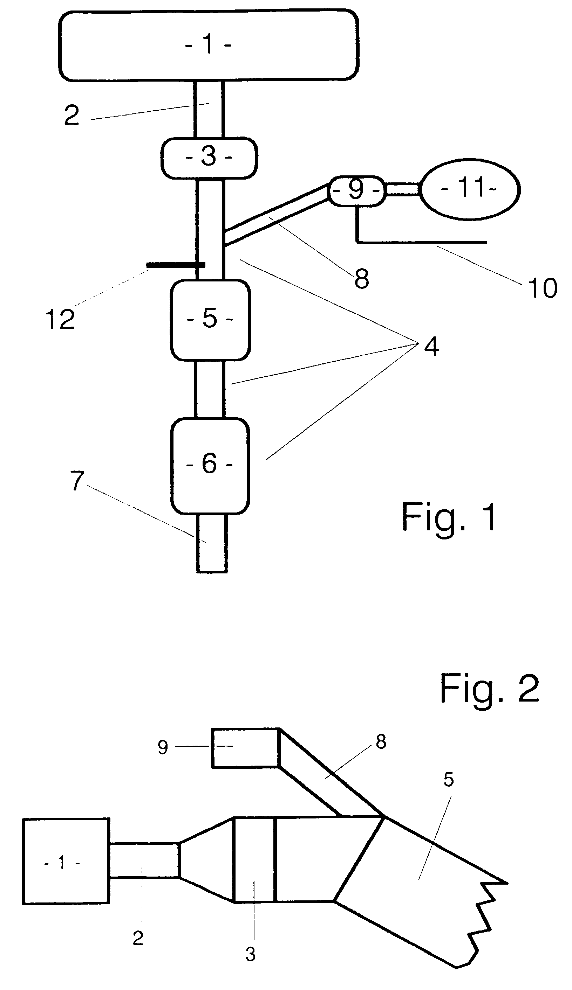

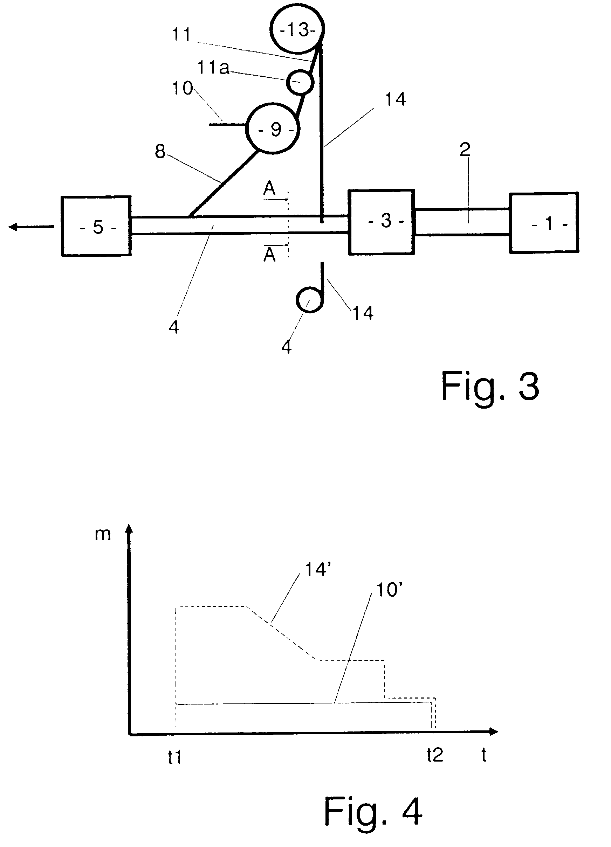

Die in Fig. 1 dargestellte und im folgenden erläuterte Prinzipskizze zeigt ein erstes bevorzugtes Ausführungsbeispiel der Erfindung. In der Fig. 2 ist ein weiteres Ausführungsbeispiel gezeigt, während die Fig. 3, 4 insbesondere Details eines Brenners, sowie der Brennersteuerung zeigen.

Mit der Bezugsziffer 1 ist eine fremdgezündete, in betriebswarmem Zustand in weiten Kennfeldbereichen mit stöchiometrischem Gemisch betriebene Brennkraftmaschine bezeichnet. Deren Abgase gelangen über einen Abgaskrümmer 2 in einen Adsorber 3, der ein Zeolith enthält. Die sich an den Adsorber 3 anschließende, in ihrer Gesamtheit mit 4 bezeichnete Abgasanlage besteht u. a. aus einem katalytischen Konverter 5 sowie einem Schalldämpfer 6. Über das Endrohr 7 gelangen die Brennkraftmaschinen-Abgase in die Umgebung.

Stromab des Adsorbers 3 sowie stromauf des Konverters 5 können über ein Brennerrohr 8 Abgase eines Brenners 9 in die Abgasanlage 4 gelangen. Die Mündungsstelle des Brennerrohres 8 in die Abgasanlage 4 ist dabei ausreichend weit vom Adsorber 3 entfernt, um zu verhindern, daß der Adsorber 3 durch heiße Brennerabgase erwärmt wird. Der Brenner 9 ist mit einer eigenen Brennstoffversorgung 10 sowie einer eigenen Brennluftversorgüng 11 (Gebläse) versehen. Vorgesehen ist ferner eine stromab der Mündung des Brennerrohres 8 in die Abgasanlage 4 hineinragende Lambda-Sonde 12, deren Signale bei der Bemessung des der Brennkraftmaschine zugeführten brennbaren Gemisches berücksichtigt werden.

Wird die kalte Brennkraftmaschine 1 gestartet, so ist auch die Abgasanlage 4 noch kalt, d. h. der katalytische Konverter 5 besitzt noch nicht seine Betriebstemperatur von mindestens 300°C, ab der er in der Lage ist, schädliche Abgasbestandteile umzuwandeln. Mit einem Start der Brennkraftmaschine 1 wird gleichzeitig der Brenner 9 in Betrieb genommen, d. h. er wird mit Brennluft sowie Brennstoff versorgt und gezündet. Die dabei freiwerdenden heißen Brenner-Abgase gelangen über das Brennerrohr 8 in die Abgasanlage 4 und bewirken somit eine verstärkte bzw. beschleunigte Erwärmung des Konverters 5.

Solange der mit einem Zeolith befüllte Adsorber 3, durch den die Brennkraftmaschinen-Abgase hindurchströmen, noch kälter als ca. 200°C - 250°C ist, können in diesem Adsorber 3 Kohlenwasserstoffe, die in den BrennkraftmaschinenAbgasen enthalten sind, gespeichert werden. In einer ersten Zeitspanne anschließend an einen Kaltstart der Brennkraftmaschine gelangen dank des Adsorbers 3 somit keine Kohlenwasserstoffe in die Umgebung. Beträgt jedoch die Temperatur des Adsorbers 3 ca. 250°C - 300°C, so gibt der Adsorber 3 die zunächst gespeicherten Kohlenwasserstoffe wieder frei. Zu diesem Zeitpunkt hat dank des Betriebs des Brenners 9 jedoch der Konverter 5 bereits seine Betriebstemperatur erreicht und ist nunmehr in der Lage, nicht nur die laufend von der Brennkraftmaschine 1 emittierten Kohlenwasserstoffe, sondern auch die zunächst im Adsorber 3 gespeicherten und nunmehr freigesetzten Kohlenwasserstoffe erfolgreich zu konvertieren. Selbstverständlich kann nunmehr, da der katalytische Konverter 5 seine Betriebstemperatur erreicht hat, auch der Brenner 9 abgeschaltet werden.

Indem eine Lambda-Sonde 12, mit der der Sauerstoffgehalt im Abgasstrom ermittelt werden kann, direkt stromauf des Konverters 5 sowie stromab der Mündung des Brennerrohres 8 angeordnet ist, wird zum einen gewährleistet, daß auch diese Lambda-Sonde 12 nach einem Kaltstart der Brennkraftmaschine 1 kurzfristig ihre Betriebstemperatur erreicht, was ebenfalls im Hinblick auf erfolgreiche Schadstoffkonvertierung im katalytischen Konverter 5 erwünscht ist. Zum anderen mißt die Lambda-Sonde 12 an der vorgeschlagenen Stelle den Summen-Abgasstrom, der sich aus dem Brennkraftmaschinen-Abgas sowie dem Brenner-Abgas ergibt. Hiermit ist es möglich, die Brennkraftmaschine 1 während der Warmlaufphase mit unterstöchiometrischem Gemisch zu betreiben und dennoch aufgrund der Brennluftversorgung 11 im katalytischen Konverter 5 ein Abgas vorliegen zu haben, welches im wesentlichen einem stöchiometrischen Gemisch entspricht, so daß im Konverter ebenfalls Stickoxide erfolgreich umgewandelt werden können.

Fig. 2 zeigt eine weitere Abwandlung. Hier weist die Abgasanlage der Brennkraftmaschine u. a. zwei hintereinander angeordnete Katalysatorkörper 3, 5 auf, die in einem gemeinsamen Gehäuse untergebracht sind, wobei der erste Katalysatorkörper/katalytische Konverter 3 zugleich als Adsorber wirkt. Das Brennerrohr 8 mündet stromab des ersten Katalysatorkörpers/Adsorbers 3 in dieses gemeinsame Gehäuse. Hierdurch wirken die Abgase des Brenners 9 direkt auf den auch bei gealtertem gesamten Katalysator noch wirksamen katalytischen Konverter 5, wobei durch die gezeigte Anordnung, d. h. durch den Abstand der Mündung des Brennerrohres zum Adsorber 3 sowie durch die gezeigte Winkellage eine Erwärmung des ersten, als Adsorber wirkenden Katalysatorkörpers 3 durch die Brennerabgase ausgeschlossen wird.

Auch bei der Prinzipskizze nach Fig. 3 gelangen die Abgase einer Brennkraftmaschine 1 über einen Abgaskrümmer 2 in einen katalytischen Konverter 5 und von diesem aus über einen nicht gezeigten Schalldämpfer gemäß Pfeilrichtung schließlich in die Umgebung. Um eine übermäßige Schadstoffemission anschließend an einen Kaltstart der Brennkraftmaschine 1 bei noch kaltem und daher im wesentlichen unwirksamen katalytischem Konverter 5 zu vermeiden, ist zunächst wieder der Adsorber 3 und darüber hinaus wieder der Brenner 9 vorgesehen, dessen Abgase über das Brennerrohr 8 in die Abgasanlage 4 eingeleitet werden. Der Brenner 9 besitzt eine eigene Brennstoffversorgung 10, die allgemein durch eine Zufuhrleitung dargestellt ist, sowie eine eigene Brennluftversorgung 11, in der hier ein Regelorgan 11a vorgesehen ist und die sich an ein Gebläse 13 anschließt. Ebenfalls vom Gebläse 13 versorgt wird eine Einblaseleitung 14, über die stromauf des Brenners 9, d. h. zwischen der Mündung des Brennerrohres 8 und dem Adsorber 3 zusätzlich Luft in die Abgasanlage 4 eingeblasen werden kann.

Nach längerem Betrieb der Brennkraftmaschine 1, wenn somit der katalytische Konverter 5 seine Betriebstemperatur erreicht hat, werden die schädlichen Abgasbestandteile in diesem katalytischen Konverter 5 oxydiert bzw. reduziert und somit in im wesentlichen unschädliche Komponenten umgewandelt. In diesem Dauerbetriebsfall wird der Brenner 9 sowie das Gebläse 13 nicht betrieben, so daß diese Aggregate insbesondere auch aufgrund ihrer Anordnung abseits der eigentlichen Abgasanlage 4 keine Störstellen für die Strömungsdynamik der Brennkraftmaschinen-Abgase darstellen. Im Anschluß an einen Kaltstart der Brennkraftmaschine kann jedoch bei noch kaltem Konverter 5 in diesem keine bzw. kaum eine Schadstoffumwandlung erfolgen. In diesem Falle wird somit der Brenner 9 in Betrieb genommen. Dabei gelangen die heißen Brennerabgase über das Brennerohr 8 zusätzlich in die Abgasanlage 4 und verursachen dort - da die Brennkraftmaschine in diesem Betriebszustand im allgemeinen unterstöchiometrisch betrieben wird und somit im Brennkraftmaschinenabgas auch trotz des vorgeschalteten Adsorbers 3 noch unverbrannte Kohlenwasserstoffe enthalten sein können - eine thermische Nachreaktion der Brennkraftmaschinenabgase Die Abgasanlage 4 stellt somit im Bereich zwischen der Einmündung des Brennerohres 8 sowie dem katalytischen Konverter 5 einen thermischen Reaktor dar, der im wesentlichen dadurch gebildet wird, daß zwischen dem Brenner 9 sowie dem Konverter 5 überhaupt ein Abgasrohr-Abschnitt liegt, d. h., daß der Brenner 9 ein Stück weit stromauf des Konverters 5 angeordnet ist. Diese Anordnung hat darüber hinaus den weiteren Vorteil, daß der Brenner 9 wie gewünscht mit maximaler Brennerleistung betrieben werden kann, ohne daß dabei die katalytische Beschichtung des Konverters 5 Schaden nehmen würde. Im übrigen wirkt der Brenner 9 neben dem geschilderten Effekt der Nachverbrennung der Brennkraftmaschinenabgase auch insofern vorteilhaft, als durch den zusätzlichen vom Brenner 9 bereitgestellten Wärmestrom der katalytische Konverter 5 binnen einer kürzeren Zeitspanne seine Anspringtemperatur bzw. optimale Betriebstemperatur erreicht. Mit Erreichen derselben kann der Brenner 9 abgeschaltet werden.

Besonders effektiv erfolgt die Nachverbrennung der Brennkraftmaschinenabgase im sog. thermischen Reaktor, d. h. in der Abgasanlage 4 stromab des Brenners 9 dann, wenn in diesem Reaktor für einen ausreichenden Sauerstoffüberschuß gesorgt ist. Um dies zu gewährleisten, ohne gleichzeitig Einbußen im Hinblick auf die Brenncharakteristik des Brenners 9 hinnehmen zu müssen, ist stromauf des Brenners die weitere Lufteinblasung in die Abgasanlage 4 über die Einblaseleitung 14 vorgesehen. Diese Lufteinblasung erfolgt annähernd tangential, wie der unterhalb der Mündungsstelle der Einblaseleitung 14 dargestellte Teilschnitt A-A zeigt. Hierdurch kann sich das Brennkraftmaschinenabgas mit der zusätzlich eingeblasenen Luftmenge bereits vor der Zufuhr des zusätzlichen Brennerabgases bereits optimal vermischen. Ferner schirmt diese zusätzlich zugeführte Luftmenge den Adsorber 3 wirkungsvoll gegenüber den heißen Brennerabgasen bzw. gegenüber dem sog. thermischen Reaktor in der Abgasanlage 4 ab, was - wie bereits im Zusammmenhang mit Fig. 1 erläutert wurde - vorteilhaft ist, um das Adsorptionsvermögen des Adsorbers 3 für eine lange Zeitspanne aufrecht zu erhalten. Im übrigen mündet auch das das Brennerabgas zuführende Brennerrohr 8 annähernd tangential in die Abgasanlage 4, um auch an dieser Stelle eine optimale Vermischung der beiden Gasströme zu erreichen.

Fig. 4 zeigt in einer Diagrammdarstellung über der Zeitachse t den in Versuchen optimierten Massenstrom m von Brennluft 11' und von Zusatzluft 14', die über die Einblaseleitung 14 zugeführt wird. Ausgehend von einem Kaltstart der Brennkraftmaschine 1 ab dem Zeitpunkt t₁ wird zumindest solange ein konstanter Brennluftstrom 11' in den Brenner 9 gefördert, bis der katalytische Konverter 5 seine Betriebstemperatur erreicht hat. Für eine gewisse weitere Zeitspanne bis zum Zeitpunkt t₂ erfolgt sowohl über die Brennluftversorgung 11 als auch über die Einblaseleitung 14 eine weitere Luftzufuhr, um die katalytische Oxidation sicher aufrechtzuerhalten. Der Zusatzluftstrom 14' hingegen ist während dieser Zeitspanne nicht konstant und wurde in diesem Versuch im wesentlichen an die jeweilige Gemischzusammensetzung der Brennkraftmaschine 1 angepaßt, sowie im Hinblick auf eine schnelle Katalysatordurchwärmung optimiert. Da jedoch in diesem Ausführungsbeispiel sowohl der Brennluftstrom 11' als auch der Zusatzluftstrom 14' von einem einzigen gemeinsamen Gebläse 13 gefördert werden, ist in der Brennluftversorgung 11 des Brenners 9 das Regelorgan 11a vorgesehen, mit dem der Brennluftstrom 11' trotz unterschiedlicher und an den gewünschten Zusatzluftstrom 14' angepaßter Gebläseleistung wie gewünscht eingestellt werden kann. Alternativ könnte selbstverständlich der Brennluftstrom 11' sowie der Zusatzluftstrom 14' jeweils von einem eigenständigen Gebläse gefördert werden.

## Patentansprüche

1. Abgasreinigungsvorrichtung einer Brennkraftmaschine (1) mit einem katalytischen Konverter (5) sowie einem stromauf desselben angeordneten, insbesondere ein Zeolith enthaltenden Adsorber (3),
gekennzeichnet durch eine als Brenner (9) mit eigener Brennstoffversorgung (10) ausgebildete Heizvorrichtung zur Erhitzung des Konverters (5) und/oder des Abgasstromes, wobei der Brenner (9) außerhalb der den Adsorber (3) mit dem Konverter (5) verbindenden Abgasanlage (4) angeordnet ist und die Brenner-Abgase stromab des Adsorbers (3) sowie stromauf des Konverters (5) über ein Brennerrohr (8) tangential ausreichend weit beabstandet vom Adsorber (3) in die Abgasanlage (4) gelangen.

2. Abgasreinigungsvorrichtung nach Anspruch 1,
gekennzeichnet durch zumindest eines der folgenden Merkmale:
- der Brenner (9) besitzt eine eigene Brennluftversorgung (11)
- eine Lambda-Sonde (12) mißt die Abgaszusammensetzung stromauf des Konverters (5) und stromab des Brenners (9).

3. Abgasreinigungsvorrichtung nach Anspruch 1 oder 2,
dadurch gekennzeichnet, daß stromauf des Brenners (9) eine weitere Lufteinblasung in die Abgasanlage (4) vorgesehen ist, die über eine annähernd tangential mündende, vom Brenner-Gebläse (13) versorgte Einblaseleitung (14) erfolgt.

4. Abasreinigungsvorrichtung nach einem der vorangegangenen Ansprüche,
dadurch gekennzeichnet, daß der Adsorber (3) ein katalytischer Konverter ist oder auf Zeolithbasis aufgebaut ist.

## Claims

1. An exhaust-gas purifying device of an internal combustion engine (1) comprising a catalytic converter (5) and an adsorber (3) disposed upstream thereof and especially containing a zeolite,
characterised by a heating device in the form of a burner (9) with a separate fuel supply (10) for heating the converter (5) and/or the stream of exhaust gas, the burner (9) being disposed outside the exhaust system (4) connecting the adsorber (3) to the converter (5), and the burner exhaust gases enter the exhaust system (4) downstream of the adsorber (3) and upstream of the converter (5), tangentially via a burner pipe (8) and at a sufficient distance from the adsorber (3).

2. An exhaust-gas purifying device according to claim 1,
characterised by at least one of the following features:
- the burner (9) has a separate combustion-air supply (11),
- a lambda probe (12) measures the exhaust-gas composition upstream of the converter (5) and downstream of the burner (9).

3. An exhaust-gas purifying device according to claim 1 or claim 2,
characterised in that additional air injection occurs into the exhaust system (4) upstream of the burner (9) through an injection line (14) which is supplied by the burner blower (13) and opens approximately at a tangent.

4. An exhaust-gas purifying device according to any of the preceding claims,
characterised in that the adsorber (3) is a catalytic converter or is zeolite-based.

## Revendications

1. Dispositif d'épuration des gaz d'échappement d'un moteur à combustion interne (1) avec un convertisseur catalytique contenant en particulier un zéolithe, dispositif d'épuration des gaz d'échappement caractérisé par un dispositif de chauffage, constitué sous la forme d'un brûleur (9) avec son alimentation propre en combustible (10), qui sert à chauffer le convertisseur (5) et/ou le flux des gaz d'échappement, le brûleur (9) étant disposé en dehors de l'installation d'échappement (4), reliant l'adsorbeur (3) au convertisseur (5), et les gaz d'échappement du brûleur arrivant en aval de l'adsorbeur (3) et en amont du convertisseur (5) par l'intermédiaire d'un tube de brûleur (8) de façon tangentielle à une distance suffisamment éloignée de l'adsorbeur (3) dans l'installation d'échappement (4).

2. Dispositif d'épuration des gaz d'échappement selon la revendication 1, caractérisé par au moins l'une des particularités suivantes:
- le brûleur (9) possède une alimentation propre en air comburant (11),
- une sonde lambda (12) mesure la composition des gaz d'échappement en amont du convertisseur (5) et en aval du brûleur (9).

3. Dispositif d'épuration de gaz d'échappement selon la revendication 1 ou la revendication 2, caractérisé en ce qu'en amont du brûleur (9) on prévoit une autre soufflerie d'air dans l'installation d'échappement (4), qui a lieu au moyen d'une conduite de soufflage (14), qui débouche à peu près tangentiellement, et est alimentée par la soufflerie du brûleur (13).

4. Dispositif d'épuration des gaz d'échappement selon l'une des revendications précédentes, caractérisé en ce que l'adsorbeur (3) est un convertisseur catalytique ou est réalisé à base de zéolithe.
